# EUROPÄISCHE PATENTSCHRIFT

(11) **EP 3 143 915 B1**
(45) Veröffentlichungstag und Bekanntmachung des Hinweises auf die Patenterteilung: **20.07.2022**
(21) Anmeldenummer: 16187829.3
(22) Anmeldetag: 08.09.2016
(51) Int. Cl.: A47J 43/28, A47J 27/62, G01K 1/02

(54) **KOCHHILFSVORRICHTUNG**
COOKING ASSISTANCE DEVICE
DISPOSITIF D'AIDE À LA CUISSON

(30) Priorität: 15.09.2015 AT 5982015
(43) Veröffentlichungstag der Anmeldung: 22.03.2017
(73) Patentinhaber: FLUXRON Solutions AG, 8580 Amriswil (CH)
(72) Erfinder: Jäckle, Benno, 9308 Lömmenschwil (CH); Reichard, Mischa, 9000 St. Gallen (CH); HEUBERGER, Roland, 8590 Romanshorn (CH)
(74) Vertreter: Torggler & Hofmann Patentanwälte - Rankweil

(56) Entgegenhaltungen:
- EP-A1- 0 441 432
- EP-A1- 1 473 554
- CN-U- 203 038 414
- DE-A1-102012 200 295

## Beschreibung

Die vorliegende Erfindung betrifft Kochhilfsvorrichtung mit einem Temperaturfühler und einer elektronischen Schaltungsanordnung, der ein Ausgabewert des Temperaturfühlers zugeführt ist, wobei von der elektronischen Schaltungsanordnung Daten zur Regelung der Temperatur eines von einer Kochstelle aufheizbaren Kochgefäßes drahtlos an eine Empfangseinheit übertragbar sind.

Um schmackhafte Speisen zuzubereiten sind je nach verwendetem Gargut, z.B. Fleisch, Fisch oder Gemüse, spezifische Gartemperaturen einzuhalten. So ist beispielsweise beim Anbraten von Fleisch je nach Vorliebe des Gastes eine bestimmte Kerntemperatur und gleichzeitig eine Bratkruste gewünscht. Zur Erfassung der Kerntemperatur sind in die zuzubereitende Speise einsteckbare Thermometer bekannt, z.B. aus der DE 31 19 496 A1, der DE 299 23 215 U1 und der DE 10 2009 019 613 A1.

In der EP 0 441 432 A1 ist eine schwimmfähige Kochhilfsvorrichtung zur Zubereitung von Eiern in einem Wasserbad gezeigt. Die Kochhilfsvorrichtung umfasst einen in ein Kunststoffmaterial eingebetteten Temperatursensor, wobei das Kunststoffmaterial eine Wärmeleitfähigkeit aufweist, die jener eines Eies entspricht. Die Kochhilfsvorrichtung ist unter denselben Bedingungen wie die Eier zu lagern und gleichzeitig mit den Eiern in das Wasserbad zu geben, damit die vom Temperatursensor gemessene Temperatur zu jedem Zeitpunkt jener des Dotters des zumindest einen mitgekochten Eies entspricht. Eine mögliche Ausführungsform bezieht sich auf eine Kochhilfsvorrichtung mit einer Empfangseinheit, an welche drahtlos ein Signal übertragen und über einen akustischen Signalgenerator der Empfangseinheit an den Benutzer ausgegeben werden kann, sobald eine vorbestimmte Temperatur vom Temperatursensor erreicht wird. Mittels einer in die Empfangseinheit eingebauten Verzögerungsschaltung kann die Ausgabe des akustischen Signals zeitlich verzögert werden, falls der Benutzer ein fester gekochtes Ei wünscht.

Beim Sous-Vide Garen wird in einen Kunststoffbeutel eingeschweißtes Gargut in einem Wasserbad gegart. Hierzu sind Sous-Vide-Geräte bekannt, welche einen Tauchsieder, einen Temperatursensor zur Erfassung der Wassertemperatur und eine Regelelektronik zur Ansteuerung des Tauchsieders aufweisen. Das Sous-Vide-Gerät kann als Einheit beispielsweise am Wasserbad eingehängt werden.

In der EP 1 239 703 A2 ist eine Kochhilfsvorrichtung der eingangs genannten Art gezeigt, welches insbesondere zur Temperaturregelung eines mit Wasser befüllten Kochgefäßes oder von Dampf in einem geschlossenen Kochgefäß dient. Der Temperaturfühler ist gemäß eines Ausführungsbeispiels an einem Schaft angebracht ist, an dem verschiedene Küchenutensilien, beispielsweise ein Kochlöffel, festgelegt werden können. Die Kochhilfsvorrichtung mit dem angebrachten Kochlöffel ist in ein mit Wasser befülltes Kochgefäß eingestellt. In anderen Ausführungsformen ist die Kochhilfsvorrichtung bei abgenommenem Küchenutensil durch eine Öffnung in einem Deckel eines Kochgefäßes eingesteckt oder am Rand des Gefäßes eingehängt. Die Messung der Temperatur erfolgt je nach Position des Temperaturfühlers relativ zum Kochgefäß an unterschiedlichen Stellen mit Abstand vom Boden des Kochgefäßes.

Ähnliche Einrichtungen gehen auch aus DE 10 2013 218 785 A1 und der DE 101 17 545 A1 hervor, wobei in letzterer Schrift der Deckel des Kochgefäßes mit einer Sensoreinheit zur Erfassung der Temperatur versehen ist.

Aufgabe der Erfindung ist es, eine vorteilhafte Kochhilfsvorrichtung der eingangs genannten Art bereitzustellen, durch welche die Zubereitung von Speisen erleichtert und/oder verbessert werden kann.

Erfindungsgemäß gelingt dies durch eine Kochhilfsvorrichtung mit den Merkmalen des Anspruchs 1.

Die Kochhilfsvorrichtung gemäß der Erfindung ist nach Art eines Stehaufmännchens ausgebildet, welches sich auf einem ebenen, horizontalen Boden des Kochgefäßes in einen aufgerichteten Zustand (= Ruhelage) aufrichtet. Jede Veränderung der Lage der Kochhilfsvorrichtung abweichend vom aufgerichteten Zustand führt zu einem Anheben des Schwerpunktes, sodass sich die Kochhilfsvorrichtung durch das wirkende Schwerkraftfeld der Erde von selbst wieder aufrichtet. Dadurch kann die Kochhilfsvorrichtung ohne besondere Beachtung der Lage der Kochhilfsvorrichtung auf dem Boden des Kochgefäßes platziert werden, da sie sich von selbst aufrichtet. Gerade in gewerblichen Küchen ist eine derartig benutzerfreundliche Ausbildung von besonderer Bedeutung. Es wird damit in einfacher Weise eine Temperaturmessung an einer definierten Stelle ermöglicht, wobei in einer vorteilhaften Ausführungsform der Erfindung mittels des Temperaturfühlers die Temperatur des Bodens des Kochgefäßes selbst erfasst werden kann. Hierbei liegt der Temperaturfühler bezogen auf den aufgerichteten Zustand den die Kochhilfsvorrichtung auf dem Boden einnimmt, günstigerweise direkt am Boden an, vorzugsweise indem der Temperaturfühler im aufgerichteten Zustand der Kochhilfsvorrichtung im Bereich der tiefsten Stelle der Kochhilfsvorrichtung liegt, mit der diese auf dem Boden aufliegt.

Unter Einsatz der Kochhilfsvorrichtung kann eine Regelung der Temperatur des Bodens eines Kochgefäßes ermöglicht werden, um beispielsweise einen Bratvorgang bei einer gewünschten Temperatur durchzuführen. Das Kochgefäß kann hierbei leer sein oder der Boden kann mit einem Ölfilm bedeckt sein. Die Kochhilfsvorrichtung kann günstigerweise auch im Zusammenhang mit der Regelung einer dickeren, den Boden bedeckenden, Flüssigkeitsschicht eingesetzt werden, wie dies beispielsweise beim Herausbacken oder Frittieren in der Pfanne, z.B. mit Speiseöl, der Fall ist.

Die Kochhilfsvorrichtung kann vorzugsweise zur Erfassung von Temperaturen von bis zu mehr als 200°C, vorzugsweise von bis zu mehr als 250°C ausgelegt sein. Beispielsweise kann ein Temperaturbereich bis 280°C vorgesehen sein.

Die elektronische Schaltungsanordnung ist günstigerweise von der tiefsten Stelle der Kochhilfsvorrichtung, mit der diese im aufgerichteten Zustand auf dem Boden des Kochgefäßes aufliegt, in vertikaler Richtung beabstandet. Der Vertikalabstand der elektronischen Schaltungsanordnung vom ebenen, horizontalen Boden des Kochgefäßes beträgt bezogen auf den aufgerichteten Zustand der Kochhilfsvorrichtung vorzugsweise mindestens 1 cm, besonders bevorzugt mindestens 2 cm. Die Bauteile der elektronischen Schaltungsanordnung, insbesondere Halbleiter-Bauteile, können dadurch vor der Einwirkung der Hitze des Bodens des Kochgefäßes geschützt werden.

Die Kochhilfsvorrichtung weist günstigerweise zumindest ein Energiespeicherelement auf. Das Energiespeichelement kann die elektronische Schaltungsanordnung und gegebenenfalls den Temperaturfühler mit elektrischer Energie versorgen. Bevorzugterweise ist das Energiespeicherelement der Kochhilfsvorrichtung ein aufladbarer Akkumulator oder ein Kondensator. Das Energiespeicherelement der Kochhilfsvorrichtung kann dann zum Beispiel mittels einer externen Ladestation, vorzugsweise drahtlos, aufgeladen werden. In alternativen Ausgestaltungsformen kann das Energiespeicherelement auch eine vom Endbenutzer aus der Kochhilfsvorrichtung entnehmbare und einsatzbare Batterie, gegebenenfalls wieder aufladbare Akku-Batterie, sein.

Der Vertikalabstand des Energiespeicherelements vom ebenen, horizontalen Boden des Kochgefäßes beträgt bezogen auf den aufgerichteten Zustand der Kochhilfsvorrichtung günstigerweise mindestens 1 cm, bevorzugt mindestens 2 cm. Dadurch können Energiespeicherelemente, welche üblicherweise besonders temperaturempfindlich sind, vor der Einwirkung der Hitze des Bodens des Kochgefäßes geschützt werden. Besonders günstig ist es, wenn das Energiespeicherelement oberhalb der elektronischen Schaltungsanordnung angeordnet ist.

Eine mögliche Ausgestaltungsform sieht vor, dass die Kochhilfsvorrichtung eine Energy-Harvesting-Einrichtung zur Versorgung der elektronischen Schaltungsanordnung und/oder des Energiespeicherelements mit elektrischer Energie aufweist. Energy-Harvesting-Einrichtungen dienen der Gewinnung von elektrischer Energie von außerhalb der Kochhilfsvorrichtung vorhandenen Energiequellen in der Umgebung. Dabei kann es sich insbesondere um magnetische Streufelder von Wirbelströmen eines Induktionskochfelds handeln. Aus diesen kann mittels in der Kochhilfsvorrichtung angeordneten Ladespulen elektrische Energie gewonnen werden. Andere Energy-Harvesting-Einrichtungen, beispielsweise zur Gewinnung von elektrischer Energie aus der Umgebungstemperatur, sind denkbar und möglich. Solche sind in anderen Bereichen der Technik bekannt. Im Falle des Einsatzes einer Energy-Harvesting-Einrichtung könnte es grundsätzlich möglich sein, auf ein Energiespeicherelement zu verzichten. Ein solches ist aber dennoch vorteilhaft, um eine lückenlose Energieversorgung zu gewährleisten und/oder auftretende Spitzen im Energieverbrauch abzupuffern.

Vorzugsweise ist die Kochhilfsvorrichtung als Schwimmer ausgebildet. D.h. die Kochhilfsvorrichtung kann in einem Wasserbad schwimmen und sinkt nicht auf den Boden des Kochgefäßes ab. Ein mögliches Anwendungsgebiet für eine schwimmende Kochhilfsvorrichtung ist die Zubereitung von Speisen beim Sous-Vide Garen, das auch als Vakuumgaren bezeichnet wird. Dabei wird das Gargut in einem Vakuumbeutel aus Kunststoff bei Wassertemperaturen von unter 100°C gegart. Ein Vorteil des Vakuumgarens liegt darin, dass durch das Vakuumieren bedeutend weniger flüchtige Geschmacksstoffe, Aromen und Flüssigkeit aus dem Gargut austreten können. Beim Erwärmen von Wasser mittels einer Kochstelle (= Küchenherd) bildet sich im auf der Kochstelle abgestellten Kochgefäß eine natürliche Strömungsbewegung im Wasserbad aus, bei der am Boden des Kochgeschirrs erwärmtes Wasser zentral im Kochgefäß bis zur Wasseroberfläche aufsteigt. Das erhitzte Wasser strömt in der Nähe der Wasseroberfläche radial nach außen und sinkt im äußeren Bereich des Wasserbads ab. Durch die schwimmende Kochhilfsvorrichtung kann die exakte Temperatur des Wasserbads in einem Bereich in der Nähe der Wasseroberfläche gemessen werden, unabhängig davon, wieviel Wasser in den Topf eingefüllt ist.

Die Kochhilfsvorrichtung ist günstigerweise als selbstaufrichtender Schwimmer ausgebildet. Aus einer beliebigen Schräglage, in welcher die Kochhilfsvorrichtung in das Wasserbad eingebracht ist, richtet sich diese also wieder von selbst in einen definierten selbstaufgerichteten, stabilen Zustand aus. Dadurch kann die Kochhilfsvorrichtung vom Endbenutzer einfach in das Wasserbad geworfen werden, ohne auf eine bestimmte Einbringungsposition zu achten, wobei sich der Temperaturfühler nach der selbsttätigen Einnahme der aufgerichteten Lage der Kochhilfsvorrichtung an der vorgegebenen Position unterhalb der Wasseroberfläche befindet.

Vorteilhafterweise ist vorgesehen, dass sich die elektronische Schaltungsanordnung im selbstaufgerichteten Zustand der im Wasserbad schwimmenden Kochhilfsvorrichtung zumindest teilweise oberhalb der Wasserlinie der Kochhilfsvorrichtung befindet. Als Wasserlinie wird jene Linie bezeichnet, in der der Wasserspiegel die äußere Oberfläche der Kochhilfsvorrichtung berührt. In anderen Worten entspricht die Wasserlinie der Schnittlinie zwischen der Ebene, in welcher die Wasseroberfläche des Wasserbads liegt, und der äußeren Oberfläche der Kochhilfsvorrichtung. Da sich die elektronische Schaltungsanordnung zumindest teilweise, vorzugsweise vollständig, oberhalb der Wasserlinie der Kochhilfsvorrichtung befindet, können die Bauteile der elektronischen Schaltungsanordnung, insbesondere Halbleiter-Bauteile, günstigerweise vor der Einwirkung durch die Wärme des Wasserbads geschützt werden. Besonders günstig ist es in diesem Zusammenhang, wenn sich die elektronische Schaltungsanordnung zumindest in einem auf die vertikale Richtung bezogenen Abstand von mehr als 1 cm über der Wasserlinie befindet.

Das Energiespeicherelement befindet sich im selbstaufgerichteten Zustand der im Wasserbad schwimmenden Kochhilfsvorrichtung vorteilhafterweise oberhalb der Wasserlinie der Kochhilfsvorrichtung, bevorzugt auch oberhalb der elektronischen Schaltungsanordnung. Dadurch können Energiespeicherelemente, welche üblicherweise besonders temperaturempfindlich sind, vor der Einwirkung der Wärme des Wasserbads geschützt werden.

Vorzugsweise ist die als Schwimmer ausgebildete Kochhilfsvorrichtung auch zur Erfassung der Temperatur eines von der Kochstelle aufheizbaren Ölbads geeignet. Dadurch kann beispielsweise die Temperatur einer großen Menge an Speiseöl, z.B. Kokosöl, Sonnenblumenöl etc., beispielsweise zum Frittieren von Speisen in einem tiefen Ölbad, exakt geregelt werden. Auch in diesem Anwendungsgebiet ist günstigerweise vorgesehen, dass die Kochhilfsvorrichtung im Ölbad als selbstaufrichtender Schwimmer ausgebildet ist. Die elektronische Schaltungsanordnung befindet sich im selbstaufgerichteten Zustand der im Ölbad schwimmenden Kochhilfsvorrichtung wiederum zumindest teilweise, vorzugsweise vollständig, oberhalb der Linie, in der der Ölspiegel die äußere Oberfläche der Kochhilfsvorrichtung berührt. Auch das Energiespeicherelement befindet sich im selbstaufgerichteten Zustand einer in einem Ölbad schwimmenden Kochhilfsvorrichtung vorteilhafterweise oberhalb der Linie, in der der Ölspiegel die äußere Oberfläche der Kochhilfsvorrichtung berührt.

Weitere Merkmale und Einzelheiten der Erfindung werden anhand des in den Fig. gezeigten Ausführungsbeispiels einer Kochhilfsvorrichtung erläutert. Es zeigen:
- Fig. 1: eine Ansicht einer erfindungsgemäßen Kochhilfsvorrichtung in schematischer Darstellung;
- Fig. 2: die Anwendung der Kochhilfsvorrichtung gemäß Fig. 1 (in einer Bratpfanne);
- Fig. 3: die Kochhilfsvorrichtung gemäß Fig. 1 in einem Wasserbad schwimmend (beim Sous-Vide Garen), mit der Kochhilfsvorrichtung im selbstaufgerichteten Zustand und - in gestrichelten Linien - in einer vom selbstaufgerichteten Zustand abweichenden Schräglage, und
- Fig. 4: die Kochhilfsvorrichtung im aufgerichteten Zustand und - in gestrichelten Linien - einer davon abweichenden Schräglage beim Ablegen auf dem Boden des Kochgefäßes gemäß Fig. 2.

Die in den Figuren dargestellte Kochhilfsvorrichtung 1 dient der Erfassung und Übermittlung der vom Temperaturfühler 2 der Kochhilfsvorrichtung 1 gemessenen Temperatur. Der Temperaturfühler 2 ist mit nicht dargestellten elektrischen Leitungen mit einer schematisch angedeuteten elektronischen Schaltungsanordnung 3 zur Erfassung des Ausgabewertes des Temperaturfühlers 2 verbunden. Die elektronische Schaltungsanordnung 3 weist Halbleiterbauteile, wie z.B. Analog-/Digitalwandler bei Verwendung analoger Temperaturfühler, Mikrocontroller zur Messwerterfassung, Speicherbauteile etc. auf. Ein Messwert-Erfassungs- und Verarbeitungsmodul ist mit 3a bezeichnet.

Die elektronische Schaltungsanordnung 3 weist im Weiteren ein Kommunikationsmodul 3b auf, welches der drahtlosen Kommunikation mit einer später noch zu erläuternden Empfangseinheit 23 einer Kochstelle 22 dient.

Die Kochhilfsvorrichtung 1 ist mit einem Energiespeicherelement 5 ausgestattet, aus dem von der elektronischen Schaltungsanordnung 3 Energie für deren Betrieb beziehbar ist.

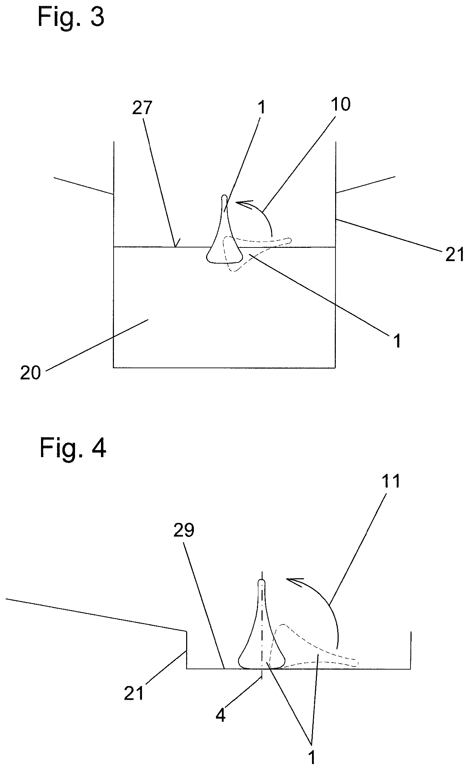

Die Kochhilfsvorrichtung 1 ist nach der Art eines Stehaufmännchens ausgebildet, d.h. nach dem Ablegen der Kochhilfsvorrichtung 1 auf einer ebenen, horizontalen Unterlage, also insbesondere auf den Boden 29 eines Kochgefäßes 21 der eben ist und horizontal liegt, in einer beliebigen Lage richtet sich diese von selbst in einen aufgerichteten Zustand auf (= der Fig. 4 in durchgezogener Linie gezeigte Ruhezustand der Kochhilfsvorrichtung 1). Jede vom Ruhezustand abweichende Schräglage der Kochhilfsvorrichtung 1 (= in unterbrochener Linie dargestellte Lage der Kochhilfsvorrichtung 1 gemäß Fig. 4) führt zu einem Anheben des Gewichtsschwerpunktes. Die nach Art eines Stehaufmännchens ausgebildete Kochhilfsvorrichtung 1 richtet sich also durch die wirkende Gravitation aus einer beliebigen Schräglage, in welcher sie gegenüber dem aufgerichteten Zustand um eine beliebige horizontale Achse um einen beliebigen Winkel geneigt ist, selbsttägig in den aufgerichteten Zustand (= Ruhelage) auf. sodass sich die Kochhilfsvorrichtung 1 durch die wirkende Gravitation von selbst wieder aufrichtet. Das Aufrichten der Kochhilfsvorrichtung 1 aus einer Schräglage beim Ablegen auf einem Boden 29 eines Kochgefäßes 21 ist in Fig. 4 durch einen Pfeil in Bewegungsrichtung 11 angedeutet.

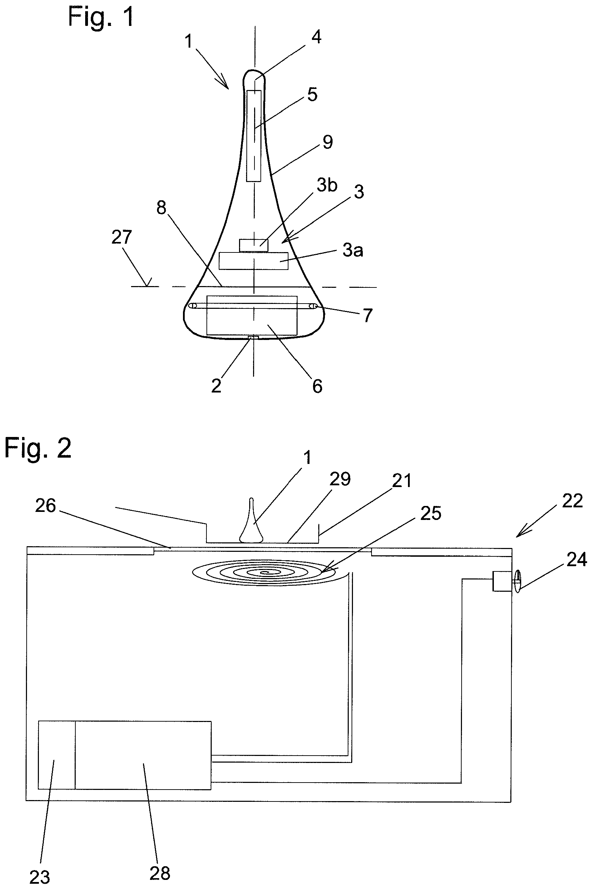

Das in Fig. 1 schematisch angedeutete Zusatzgewicht 6 kann das Aufrichten aus jeder beliebigen Schräglage in den aufgerichteten Zustand unterstützen.

Sogenannte Stehaufmännchen sind als Kinderspielzeug grundsätzlich bekannt.

Die Kochhilfsvorrichtung 1 kann auf dem Boden 29 des Kochgefäßes 21 in horizontaler Richtung frei bewegt werden.

Im Ausführungsbeispiel ist die Kochhilfsvorrichtung 1 rotationssymmetrisch ausgebildet. Im aufgerichteten Zustand (= Ruhezustand) der Kochhilfsvorrichtung 1 ist die Längsachse 4 der rotationssymmetrischen Kochhilfsvorrichtung 1 in vertikaler Richtung ausgerichtet, vgl. Fig. 4. Die Kochhilfsvorrichtung 1 könnte in einer anderen Ausgestaltung auch asymmetrisch ausgebildet sein.

Vorzugsweise ist vorgesehen, dass im aufgerichteten Zustand (=Ruhezustand), in welchen sich die Kochhilfsvorrichtung 1 beim Ablegen auf dem ebenen, horizontalen Boden 29 des Kochgefäßes 21 aufrichtet, der Temperaturfühler 2 im Bereich einer tiefsten Stelle der Kochhilfsvorrichtung 1 angeordnet ist, und den Boden 29 berührt. Dadurch ist gewährleistet, dass die Temperatur des Bodens 29 des Kochgefäßes 21 mit der in das Kochgefäß 21 eingebrachten Kochhilfsvorrichtung 1 zuverlässig gemessen werden kann. Das Kochgefäß 21 kann hierbei leer sein oder der Boden kann mit einer Flüssigkeit, insbesondere Öl, bedeckt sein, z.B. um eine Speise anzubraten. Es kann sich dabei um einen Flüssigkeitsfilm, insbesondere Ölfilm, geringer Höhe oder um eine dickere Flüssigkeitsschicht, insbesondere Ölschicht, beispielsweise zum Herausbacken von Speisen, handeln.

Die Kochhilfsvorrichtung 1 kann, wie weiter unten genauer beschrieben, schwimmfähig ausgebildet sein, was bevorzugt ist. In diesem Fall ist günstigerweise vorgesehen, dass sich die Kochhilfsvorrichtung 1 sowohl bei einem leeren Kochgefäß 21 als auch bei einer Befüllung des Kochgefäßes 21 mit Flüssigkeit, beispielsweise Wasser oder Öl, bis zu einer beliebigen Höhe, bei welcher die Kochhilfsvorrichtung 1 noch nicht schwimmt, aus einer beliebigen Lage, in der die Kochhilfsvorrichtung 1 in das Kochgefäß 21 eingelegt wird, in den aufgerichteten Zustand aufrichtet. Der beim allfälligen Schwimmen der Kochhilfsvorrichtung 1 eingenommene Zustand ist weiter unten beschrieben.

Sollte die Kochhilfsvorrichtung 1 nicht schwimmfähig ausgebildet sein, ist günstigerweise vorgesehen, dass sich die Kochhilfsvorrichtung 1 bei einer beliebigen Befüllung des Kochgefäßes 21 mit Flüssigkeit, insbesondere Wasser oder Öl, aus einer beliebigen Lage, in der die Kochhilfsvorrichtung 1 in das Kochgefäß 21 eingelegt wird, in den aufgerichteten Zustand aufrichtet. In diesem Fall kann es aufgrund der einwirkenden Temperaturbelastung aber erforderlich sein, das Kochgefäß 21 höchstens so hoch zu befüllen, dass die elektronische Schaltungsanordnung 3 und/oder das Energiespeicherelement 5 in Vertikalrichtung beabstandet über dem Flüssigkeitsspiegel liegt.

Im Ausführungsbeispiel schließt der Temperaturfühler 2 mit der Außenoberfläche des Gehäuses 9 der Kochhilfsvorrichtung 1 bündig ab, wobei der Temperaturfühler 2 das Gehäuse 9 durchdringt. Dadurch kann die Temperatur zuverlässig gemessen und ein plötzlicher Temperaturanstieg, z.B. infolge der Berührung des Bodens des Kochgefäßes 21, rasch erfasst werden. Der Temperaturfühler 2 kann hierzu günstigerweise ein Gehäuseteil mit guten Wärmeleitungseigenschaften, z.B. eine metallischen Hülse, aufweisen mit welchem ein Sensorelement des Temperaturfühlers 2 wärmeleitend verbunden ist. In anderen Ausgestaltungen könnte der Temperaturfühler 2 auch ein als, vorzugsweise metallisches, Kontaktstück ausgebildetes Gehäuseteil aufweisen, an welchem das Sensorelement wärmeleitend festgelegt ist. Es ist aber auch denkbar und möglich, dass der Temperaturfühler 2 im Innenraum der Kochhilfsvorrichtung 1 angeordnet ist, wobei dann das Gehäuse 9 zumindest im Bereich des Temperaturfühlers 2 eine ausreichende Wärmeleitfähigkeit und/oder eine geringere Wandstärke aufweist. Auch dadurch könnte die Temperatur des Bodens 29 des Kochgefäßes 21 erfasst werden.

Der Temperaturfühler 2 könnte in einer anderen Ausführungsform auch über das Gehäuse 9 der Kochhilfsvorrichtung 1 hervorstehen, vorzugsweise nur geringfügig. Auch dann richtet sich die Kochhilfsvorrichtung 1 beim Ablegen auf einer ebenen Unterlage günstigerweise von selbst in einen aufgerichteten Zustand auf. Das Aufrichten kann dabei durch den vorstehenden Temperaturfühler 2 in einer Lage begrenzt sein, in welcher die Längsachse 4 der Kochhilfsvorrichtung 1 noch geneigt zur Vertikalen steht. Hierbei können verschiedene solche Lagen eingenommen werden, in denen die Längsachse 4 jeweils auf dem Mantel eines gedachten Kegels liegt. Es wird dann die Gesamtheit dieser Lagen als aufgerichteter Zustand im Sinne der vorherigen Beschreibung angesehen.

Das Sensorelement des Temperaturfühlers 2 kann ein hinlänglich bekannter Analogsensor oder ein Digitalsensor sein. Die Messauflösung des Temperaturfühlers 2 ist zumindest im Bereich unter 100°C kleiner als 0,5°C, vorzugsweise 0,1°C. Der Temperaturfühler 2 weist im Ausführungsbeispiel einen nach oben begrenzten Messbereich von zumindest 280°C auf.

Im Ausführungsbeispiel weist die Kochhilfsvorrichtung 1 eine Energy-Harvesting-Einrichtung zur Versorgung der elektronischen Schaltungsanordnung 3 mit elektrischer Energie auf. Im dargestellten Anwendungsfall dient die Ladespule 7 der Energy-Harvesting-Einrichtung der Gewinnung elektrischer Energie aus magnetischen Streufeldern von Wirbelströmen eines Induktionskochfelds einer Kochstelle 22. Diese beim Beheizen eines Kochgefäßes 21 mittels Induktionsspulen erzeugten Wirbelströme können neben der Erhitzung des Kochgefäßes 21 auch zur Versorgung der elektronischen Schaltungsanordnung 3 mit elektrischer Energie während des Betriebs des Kochhilfsvorrichtung 1 verwendet werden. Das bereits erwähnte Zusatzgewicht 6 besteht im Ausführungsbeispiel aus einem Ferritring. Der Ferritring bündelt die Wirbelströme und steigert den Wirkungsgrad der Ladespule 7 der Energy-Harvesting-Einrichtung.

Das Energiespeicherelement 5 gewährleistet die Energieversorgung der elektronischen Schaltungsanordnung 3 hierbei insbesondere während Betriebspausen der Kochstelle 22. Hierzu kann das Energiespeicherelement 5 als aufladbarer Akkumulator oder als Kondensator, insbesondere als Superkondensator, ausgebildet sein. Wenn gewährleistet ist, dass die Energy-Harvesting-Einrichtung immer, wenn eine Temperaturmessung und -übermittlung gewünscht ist, ausreichend Energie zur Verfügung stellt, kann das Energiespeicherelement 5 auch entfallen.

Abweichend vom dargestellten Ausführungsbeispiel ist es in einer weiteren Ausgestaltung der Kochhilfsvorrichtung 1 auch möglich, auf eine Energy-Harvesting-Einrichtung zu verzichten und ausschließlich ein Energiespeicherelement 5 zur Versorgung der elektronischen Schaltungsanordnung 3 mit elektrischer Energie vorzusehen. Es könnte hierbei die im Ausführungsbeispiel dargestellte Ladespule 7 zum Aufladen des Energiespeicherelements 5 mittels einer berührungslosen Ladeeinrichtung vorgesehen sein. Die Aufladung erfolgt hierbei außerhalb der Betriebszeiten der Kochhilfsvorrichtung 1. Andererseits könnte das Energiespeicherelement 5 auch eine vom Endbenutzer aus der Kochhilfsvorrichtung 1 entnehmbare und einsetzbare Batterie sein.

Bezogen auf den aufgerichteten Zustand, in welchen sich die Kochhilfsvorrichtung 1 beim Aufliegen auf dem Boden 29 von selbst aufrichtet, beträgt der Vertikalabstand der elektronischen Schaltungsanordnung 3 vom Boden 29 mindestens 1 cm. Dadurch sind die Halbleiter-Bauteile der elektronischen Schaltungsanordnung 3 vor der direkten Einwirkung der Hitze des erhitzten Bodens 29 eines Kochgefäßes 21 geschützt. Auch das Energiespeicherelement 5 ist bezogen auf den aufgerichteten Zustand den die Kochhilfsvorrichtung 1 auf dem Boden 29 einnimmt, mit einem Vertikalabstand von mindestens 1cm, günstigerweise mehr als 2 cm, vom Boden 29 beabstandet. Im Ausführungsbeispiel befindet sich das Energiespeicherelement 5 im aufgerichteten Zustand der Kochhilfsvorrichtung 1 oberhalb der elektronischen Schaltungsanordnung 3, um die temperaturempfindlichen Bauteile des Energiespeicherelements 5 vor der Einwirkung der Hitze des Bodens 29 zu schützen.

Die elektronische Schaltungsanordnung 3 und das vorzugsweise vorhandene Energiespeicherelement 5, sowie, soweit vorhanden, die Ladespule 7 und das Zusatzgewicht 6, vorzugsweise auch der Temperaturfühler 2, sind vollständig im Innenraum des Gehäuses 9 der Kochhilfsvorrichtung 1 angeordnet. Das Gehäuse 9 der Kochhilfsvorrichtung 1 ist vorzugsweise stoßfest und flüssigkeitsdicht ausgebildet. Zumindest in einem Bereich, der an die im aufgerichteten Zustand tiefste Stelle angrenzt, ist das Gehäuse 9 günstigerweise für einen Temperaturbereich von zumindest 280°C ausgelegt.

Das Gehäuse 9 der Kochhilfsvorrichtung 1 besteht aus einem hygienischen und lebensmitteltauglichen Material, wobei die äußere Oberfläche des Gehäuses 9 günstigerweise spaltfrei ausgebildet ist, um eine schnelle Reinigung zu ermöglichen. Die äußere Oberfläche des Gehäuses 9 ist vorzugsweise frei von Vertiefungen, in welchen sich ansonsten Schmutz ansammeln könnte.

Im Ausführungsbeispiel ist das Kommunikationsmodul 3b ein Bluetooth 4.0 Modul.

Dieses zeichnet sich durch einen geringen Stromverbrauch während des Betriebs aus. Auch der Einsatz anderer drahtloser Kommunikationsmodule ist denkbar. Neben der Kommunikation des Kommunikationsmoduls 3b mit der Empfangseinheit 23 ist es auch denkbar, dass das Kommunikationsmodul 3b auch einen Datenaustausch mit anderen elektronischen Geräten, wie z. B. Mobiltelefonen, Tablets oder anderen Geräte zum Darstellen der aktuell gemessenen Temperatur oder anderer Betriebszustände der Kochhilfsvorrichtung, ermöglicht. Um die Reichweite des Kommunikationsmoduls 3b zu erhöhen, ist es denkbar, dass bezogen auf den selbstaufgerichteten Zustand den die im Wasserbad schwimmende Kochhilfsvorrichtung 1 einnimmt, eine Antenne des Kommunikationsmoduls 3b im obersten Bereich der Kochhilfsvorrichtung angeordnet ist. Dies ist in den Figuren nicht gesondert dargestellt. Zweckmäßigerweise gewährleistet das Kommunikationsmodul 3b auch beim Betrieb der Kochhilfsvorrichtung 1 innerhalb von metallenen, gegebenenfalls durch einen Deckel verschlossenen, Kochgefäßen 21 eine zuverlässige Datenübertragung.

In Fig. 2 ist ein Beispiel für das Regeln der Temperatur eines als Bratpfanne ausgebildeten Kochgefäßes 21 mithilfe der Kochhilfsvorrichtung 1 gezeigt. Aufgrund der bereits erläuterten Ausbildung der Kochhilfsvorrichtung 1 nach Art eines Stehaufmännchens kann die Kochhilfsvorrichtung 1 in einer beliebigen Lage auf dem Boden 29 des Kochgefäßes 21 abgelegt werden und nimmt selbsttätig den aufgerichteten Zustand (= Ruhezustand) ein. Das Kochgefäß 21 ist auf einem Glaskeramikfeld 26 der Kochstelle 22 mit einer Induktionsspule abgestellt. Mit dem Bedienelement 24 kann vom Endbenutzer eine Vorauswahl der gewünschten Temperatur (= Stellgröße) des Bodens 29 für die Temperaturregelung getroffen werden. Die Empfangseinheit 23 der Kochstelle 22 empfängt Daten, insbesondere die gemessene Temperatur des Bodens 29, von der Kochhilfsvorrichtung 1 und liefert diese an den Heizregler 28, welcher die Stellgröße mit dem vom Temperaturfühler 2 gemessenen Temperaturwert des Bodens 29 vergleicht. Durch die Rückkoppelung der tatsächlich gemessenen Temperatur des Wasserbads mittels des Temperaturfühlers 2 der Kochhilfsvorrichtung 1 ist der Regelkreis geschlossen. Der Heizregler 28 steuert das Heizelement 25 (= Induktionsspule) entsprechend der Abweichung zwischen der gewünschten und der gemessenen Temperatur des Bodens 29 des Kochgefäßes 21 an.

Der Begriff Heizregler 28 ist weit zu fassen und umfasst auch entsprechende Treibermodule zur Ansteuerung des jeweiligen Heizelementes 25. Im Ausführungsbeispiel ist das Heizelement 25 eine Induktionsspule, mit welcher der Boden des Kochgefäßes 21 induktiv erwärmt wird. Wie bereits erläutert, kann das magnetische Streufeld der Wirbelströme, welches von der Induktionsspule des Heizelements 25 erzeugt wird, von der Kochhilfsvorrichtung 1 zur Gewinnung von elektrischem Strom herangezogen werden.

Neben der Übermittlung von Daten über die vom Temperaturfühler 2 der Kochhilfsvorrichtung 1 gemessene Temperatur ist es auch denkbar und möglich, dass Informationen über den Betriebszustand der Kochhilfsvorrichtung 1, z.B. über den Ladestand des Energiespeicherelements 5 oder kurzfristige Veränderungen der Temperatur an die Empfangseinheit 23 oder an andere elektronische Geräte übermittelt werden. Bei Überschreitung eines vorbestimmten Temperaturschwellwerts könnte z.B. ein Ausschalten des Heizelements 25 und/oder die Ausgabe eines Signals, insbesondere eines Warntons, erfolgen.

Alternativ oder zusätzlich kann die elektronische Schaltungsanordnung 3 der Kochhilfsvorrichtung 1 selbst eine nicht gesondert dargestellte Signaleinrichtung aufweisen, welche bei kritischen Betriebszuständen einen Warnton erzeugt und/oder eine in die elektronische Schaltungsanordnung 3 integrierte Warnleuchte aktiviert.

Abweichend vom in Fig. 2 dargestellten Anwendungsfall kann die Kochhilfsvorrichtung 1 auch bei in anderer Art ausgebildeten Kochstellen 22, z.B. bei mit Gas betriebenen Heizelementen 25 oder Heizelementen 25 mit Widerstandsheizung verwendet werden.

Die Kochhilfsvorrichtung 1 ist günstigerweise im Weiteren als selbstaufrichtender Schwimmer ausgebildet, d.h. die Kochhilfsvorrichtung 1 kann, bei ausreichendem Flüssigkeitsstand, in Flüssigkeiten schwimmen. Bei einem Einsatz in einem Wasserbad 20, z. B. beim Sous-Vide Garen, schwimmt die Kochhilfsvorrichtung 1 im bis zu 100°C heißen Wasserbad 20 und kann sich im Wasserbad 20 frei bewegen, vgl. Fig. 3. Insbesondere führen keine Kabel oder Befestigungsvorrichtungen von der Kochhilfsvorrichtung 1 zur Befestigung im oder am das Wasserbad 20 enthaltenden Kochgefäß 21 weg.

Die im Wasserbad 20 schwimmende Kochhilfsvorrichtung 1 nimmt im selbstaufgerichteten Zustand eine stabile Lage ein. Bei einer relativ zum selbstaufgerichteten Zustand ausgelenkten Schräglage, z.B. beim Hineinwerfen der Kochhilfsvorrichtung 1 in das Wasserbad 20 in beliebiger Lage, richtet sich die Kochhilfsvorrichtung 1 von selbst in den selbstaufgerichteten Zustand auf, vgl. die in durchgezogener Linie dargestellte Kochhilfsvorrichtung 1 in Fig. 3. Zur Aufrichtung der Kochhilfsvorrichtung 1 in den selbstaufgerichteten Zustand wirkt in der Schräglage der Kochhilfsvorrichtung 1 (= in unterbrochener Linie dargestellte Lage der Kochhilfsvorrichtung gemäß Fig. 3) ein aufrichtendes Moment auf die Kochhilfsvorrichtung 1 ein. Das Aufrichten der Kochhilfsvorrichtung 1 aus der Schräglage ist in Fig. 3 durch einen Pfeil in Bewegungsrichtung 10 angedeutet. Im Ausführungsbeispiel unterstützt das Zusatzgewicht 6 auch die selbständige Aufrichtung der Kochhilfsvorrichtung 1 im Wasserbad 20.

In Fig. 3 ist als Schräglage eine Verdrehung von weniger als 90° um eine horizontale Achse gegenüber dem selbstausgerichteten Zustand dargestellt. Das Aufrichten erfolgt aber auch für Verdrehungen von mehr als 90° um eine beliebige horizontale Achse, vorzugsweise auch bei Verdrehungen bis zu 180°.

Es ist bekannt, schwimmende Gegenstände selbstaufrichtend auszubilden. Insbesondere bei Schiffen sind derartige Ausbildungen als Selbstaufrichter bekannt. Um Selbstaufrichter auszubilden geht es insbesondere darum, dass bei Auslenkung des Selbstaufrichters (hier der Kochhilfsvorrichtung 1) aus dem selbstaufgerichteten Zustand zwischen der Gewichtskraft und der Auftriebskraft ein Hebelarm gebildet wird, der ein aufrichtendes Moment hervorruft. Ein solcher Hebelarm kann bis zu einer Verdrehung von bis zu 180° um eine horizontale Achse wirken, um den Selbstaufrichter aufzurichten. Bei einer Verdrehung von genau 180° kann theoretisch ein labiles Gleichgewicht vorliegen, welches aber bei der kleinsten Störung aufgehoben wird, sodass der Selbstaufrichter sich von selbst in den selbstaufgerichteten Zustand aufrichtet.

Der Temperaturfühler 2 der Kochhilfsvorrichtung 1 ist, bezogen auf den selbstaufgerichteten Zustand den die im Wasserbad 20 schwimmende Kochhilfsvorrichtung 1 einnimmt, unter der Wasserlinie 8 der Kochhilfsvorrichtung 1 angeordnet. Die Wasserlinie 8 liegt dabei in einer Ebene mit dem Wasserspiegel 27, an der Stelle, an der der Wasserspiegel 27 die äußere Oberfläche der Kochhilfsvorrichtung 1 berührt. Die Lage des Wasserspiegels 27 zur Kochhilfsvorrichtung 1 im schwimmenden Zustand der Kochhilfsvorrichtung 1 sowie die Wasserlinie 8 sind in Fig. 1 eingezeichnet.

Sinkt der Wasserspiegel 27 während des Betriebs soweit ab, dass der Temperaturfühler 2 den in der Regel wesentlich heißeren Boden des Kochgefäßes 21 berührt, könnte ein rascher Temperaturanstieg erfasst werden und ein Alarmsignal an die Empfangseinheit 23 gesendet werden.

Die elektronische Schaltungsanordnung 3 und das Energiespeicherelement 5 befinden sich im selbstaufgerichteten Zustand der im Wasserbad 20 schwimmenden Kochhilfsvorrichtung 1 vollständig oberhalb der Wasserlinie 8 der Kochhilfsvorrichtung 1. Der Vertikalabstand der elektronischen Schaltungsanordnung 3 von der Wasserlinie 8 beträgt mehr als 1 cm. Dadurch sind temperaturempfindliche Bauteile, insbesondere Halbleiter-Bauteile, der elektronischen Schaltungsanordnung 3 und/oder temperaturempfindliche Energiespeicherelemente 5 vor der Einwirkung der Wärme des Wasserbads 20 geschützt.

Die Kochhilfsvorrichtung 1 ist vorzugsweise auch zur Erfassung der Temperatur eines von der Kochstelle 22 aufheizbaren Ölbads geeignet, in welchem die Kochhilfsvorrichtung 1 schwimmt. Die Temperatur des mit Speiseöl aufgefüllten Ölbads kann bis zu 180°C betragen. Gerade bei der Anwendung im Ölbad ist es günstig, wenn sich die elektronische Schaltungsanordnung 3, und vorzugsweise auch das Energiespeicherelement 5, im selbstaufgerichteten Zustand der im Ölbad schwimmenden Kochhilfsvorrichtung 1 vollständig oberhalb der Linie befindet, in der der Ölspiegel die äußere Oberfläche der Kochhilfsvorrichtung 1 berührt. Da Speiseöl in der Regel eine geringere Dichte als Wasser aufweist, taucht die Kochhilfsvorrichtung 1 im Ölbad tiefer ein. Der Abstand der elektronischen Schaltungsanordnung 3 von der Linie in der der Ölspiegel die äußere Oberfläche der Kochhilfsvorrichtung 1 berührt, beträgt aber auch im Ölbad günstigerweise mehr als 1 cm, um die temperaturempfindlichen Bauteile der Kochhilfsvorrichtung 1 vor der Einwirkung der Hitze des Ölbads zu schützen.

Die Kochhilfsvorrichtung 1 könnte einen abgedichteten Schalter zur Aktivierung der Temperaturmessung aufweisen. Es ist auch denkbar, dass die elektronische Schaltungsanordnung einen Beschleunigungssensor aufweist. Durch Erfassung einer vom Endbenutzer aufgebrachten Bewegung der Kochhilfsvorrichtung 1 oder ein Schütteln der Kochhilfsvorrichtung 1 könnte eine Aktivierung der Kochhilfsvorrichtung 1 erfolgen. In einer anderen Ausgestaltung könnte die Aktivierung mittels eines Gegenstücks, z. B. eines Magnetfeldschalters, erfolgen. Wird eine Ladeeinrichtung zur Aufladung des Energiespeicherelements 5 verwendet, könnte eine automatische Aktivierung der Kochhilfsvorrichtung 1 beispielsweise auch beim Entfernen aus dem Ladegerät erfolgen.

Es ist denkbar und möglich, dass die Kochhilfsvorrichtung 1 einen Indikator aufweist, welcher eine Fehlanwendung (z. B. bei einem Einsatz der Kochhilfsvorrichtung bei über der zulässigen Betriebstemperatur liegenden Temperaturen) eine "Sollbruchstelle" bildet. Dadurch kann einer ungerechtfertigten Beanspruchung der Garantieleistung des Herstellers bei einer nicht bestimmungsgemäßen Verwendung der Kochhilfsvorrichtung 1 nachgewiesen werden. Derartige "Sollbruchstellen" im Sinne eines definierten Sicherheitsmerkmals zum Nachweis einer Überbeanspruchung der Kochhilfsvorrichtung 1 sind in anderen Bereichen bekannt. Die Kochhilfsvorrichtung 1 hält günstigerweise einwirkenden Magnetfeldern eines Induktionskochfeldes beim unbeabsichtigten Ablegen der Kochhilfsvorrichtung 1 auf einem Induktionskochfeld stand.

Bei der gleichzeitigen Benutzung mehrerer Kochhilfsvorrichtungen 1 mit mehreren unterschiedlichen Kochgefäßen 21 ist es denkbar und möglich, dass eine eindeutige Zuordnung der jeweiligen Kochhilfsvorrichtung 1 zur jeweiligen Empfangseinheit 23 und/oder zum jeweiligen Heizregler 28 erfolgt. Dadurch kann die Temperatur des Bodens 29 des jeweiligen Kochgefäßes 21 oder des zu regelnden Wasserbads 20 dem jeweils zugehörigen Regelkreis zugeführt werden. Um die Zuordnung bzw. Paarung zu erleichtern, ist es denkbar, dass die optionale Signaleinheit der Kochhilfsvorrichtung 1 ein optisches, akustisches oder haptisches Feedback bei der Zuordnung der Kochhilfsvorrichtung 1 zum jeweiligen Regelkreis erzeugt.

Im Ausführungsbeispiel befindet sich der Temperaturfühler 2 bezogen auf den aufgerichteten Zustand der Kochhilfsvorrichtung 1 im Bereich der tiefsten Stelle der Kochhilfsvorrichtung 1 und berührt den Boden 29 des Kochgefäßes 21. Dies muss nicht so sein. Wird die Kochhilfsvorrichtung 1, beispielsweise nur zum Herausbacken von Speisen mit einem mit einer Ölschicht belegten Boden verwendet, ist es denkbar und möglich, dass der Temperaturfühler bezogen auf den aufgerichteten Zustand der Kochhilfsvorrichtung an einer definierten Stelle beabstandet vom Boden, z.B. seitlich, an der Kochhilfsvorrichtung, angeordnet ist.

### Legende zu den Hinweisziffern:

- 1: Kochhilfsvorrichtung
- 2: Temperaturfühler
- 3: elektronische Schaltungsanordnung
- 3a: Messwert-Erfassungs- und Verarbeitungsmodul
- 3b: Kommunikationsmodul
- 4: Längsachse
- 5: Energiespeicherelement
- 6: Zusatzgewicht
- 7: Ladespule
- 8: Wasserlinie
- 9: Gehäuse
- 10: Bewegungsrichtung
- 11: Bewegungsrichtung

- 20: Wasserbad
- 21: Kochgefäß
- 22: Kochstelle
- 23: Empfangseinheit
- 24: Bedienelement
- 25: Heizelement
- 26: Glaskeramikfeld
- 27: Wasserspiegel
- 28: Heizregler
- 29: Boden

## Patentansprüche

1. Kochhilfsvorrichtung (1) mit einem Temperaturfühler (2) und einer elektronischen Schaltungsanordnung (3), der ein Ausgabewert des Temperaturfühlers (2) zugeführt ist, wobei von der elektronischen Schaltungsanordnung (3) Daten zur Regelung der Temperatur eines von einer Kochstelle (22) aufheizbaren Kochgefäßes (21) drahtlos an eine Empfangseinheit (23) übertragbar sind, **dadurch gekennzeichnet, dass** die Kochhilfsvorrichtung (1) nach Art eines Stehaufmännchens ausgebildet ist, welches sich auf einem ebenen, horizontalen Boden (29) des Kochgefäßes (21) in einen aufgerichteten Zustand aufrichtet.

2. Kochhilfsvorrichtung (1) nach Anspruch 1, **dadurch gekennzeichnet, dass** mittels des Temperaturfühlers (2) die Temperatur des Bodens (29) des Kochgefäßes (21) erfassbar ist.

3. Kochhilfsvorrichtung (1) nach Anspruch 2, **dadurch gekennzeichnet, dass** der Temperaturfühler (2) bezogen auf den aufgerichteten Zustand, den die Kochhilfsvorrichtung (1) auf dem ebenen, horizontalen Boden (29) des Kochgefäßes (21) einnimmt, am Boden (29) anliegt.

4. Kochhilfsvorrichtung (1) nach einem der Ansprüche 1 bis 3, **dadurch gekennzeichnet, dass** die elektronische Schaltungsanordnung (3) bezogen auf den aufgerichteten Zustand, den die Kochhilfsvorrichtung (1) auf dem ebenen, horizontalen Boden (29) des Kochgefäßes (29) einnimmt, mit mindestens 1 cm Vertikalabstand vom Boden (29) beabstandet ist.

5. Kochhilfsvorrichtung (1) nach einem der Ansprüche 1 bis 4, **dadurch gekennzeichnet, dass** die Kochhilfsvorrichtung (1) zumindest ein Energiespeicherelement (5) aufweist.

6. Kochhilfsvorrichtung (1) nach Anspruch 5, **dadurch gekennzeichnet, dass** das Energiespeicherelement (5) bezogen auf den aufgerichteten Zustand, den die Kochhilfsvorrichtung (1) auf dem ebenen, horizontalen Boden (29) des Kochgefäßes (21) einnimmt, mit mindestens 1 cm, vorzugsweise mindestens 2 cm, Vertikalabstand vom Boden (29) beabstandet ist.

7. Kochhilfsvorrichtung (1) nach einem der Ansprüche 5 oder 6, **dadurch gekennzeichnet, dass** das Energiespeicherelement (5) ein aufladbarer Akkumulator oder ein Kondensator ist.

8. Kochhilfsvorrichtung (1) nach einem der Ansprüche 5 bis 7, **dadurch gekennzeichnet, dass** das Energiespeicherelement (5) eine vom Endbenutzer aus der Kochhilfsvorrichtung (1) entnehmbare und einsetzbare Batterie ist.

9. Kochhilfsvorrichtung (1) nach einem der Ansprüche 1 bis 8, **dadurch gekennzeichnet, dass** die Kochhilfsvorrichtung (1) eine Energy-Harvesting-Einrichtung zur Versorgung der elektronischen Schaltungsanordnung (3) und/oder eines Energiespeicherelements (5) der Kochhilfsvorrichtung (1) mit elektrischer Energie aufweist.

10. Kochhilfsvorrichtung (1) nach einem der Ansprüche 1 bis 9, **dadurch gekennzeichnet, dass** die Kochhilfsvorrichtung (1) als Schwimmer ausgebildet ist.

11. Kochhilfsvorrichtung (1) nach Anspruch 10, **dadurch gekennzeichnet, dass** die Kochhilfsvorrichtung (1) als selbstaufrichtender Schwimmer ausgebildet ist.

12. Kochhilfsvorrichtung (1) nach Anspruch 11, **dadurch gekennzeichnet, dass** sich die elektronische Schaltungsanordnung (3) in einem selbstaufgerichteten Zustand einer in einem Wasserbad (20) schwimmenden Kochhilfsvorrichtung (1) zumindest teilweise oberhalb der Wasserlinie (8) der Kochhilfsvorrichtung (1) befindet.

13. Kochhilfsvorrichtung (1) nach einem der Ansprüche 11 bis 12, **dadurch gekennzeichnet, dass** sich die elektronische Schaltungsanordnung (3) im selbstaufgerichteten Zustand einer in einem Ölbad schwimmenden Kochhilfsvorrichtung (1) zumindest teilweise oberhalb der Linie befindet, in der der Ölspiegel die äußere Oberfläche der Kochhilfsvorrichtung (1) berührt.

## Claims

1. A cooking assistance device (1) having a temperature sensor (2) and an electronic circuit arrangement (3) to which there is supplied an output value of the temperature sensor (2), wherein data for regulating the temperature of a cooking vessel (21), heatable by a hotplate, is transmittable wirelessly to a receiving unit (23) from the electronic circuit arrangement (3), **characterised in that** the cooking assistance device (1) is formed in the manner of a tumbler which rights itself on a plane, horizontal bottom (29) of the cooking vessel (21) in a righted state.

2. A cooking assistance device (1) according to claim 1, **characterised in that** the temperature of the bottom (29) of the cooking vessel (21) can be determined by means of the temperature sensor (2).

3. A cooking assistance device (1) according to claim 2, **characterised in that** related to the righted state which the cooking assistance device (1) assumes on the plane, horizontal bottom (29) of the cooking vessel (21), the temperature sensor (2) contacts the bottom (29).

4. A cooking assistance device (1) according to any one of claims 1 to 3, **characterised in that** related to the righted state which the cooking assistance device (1) assumes on the plane, horizontal bottom (29) of the cooking vessel (29[sic]), the electronic circuit arrangement (3) is vertically spaced apart from the bottom (29) by at least 1 cm.

5. A cooking assistance device (1) according to any one of claims 1 to 4, **characterised in that** the cooking assistance device (1) has at least one energy storage element (5).

6. A cooking assistance device (1) according to claim 5, **characterised in that** related to the righted state which the cooking assistance devices (1) assumes on the plane, horizontal bottom (29) of the cooking vessel (21), the energy storage element (5) is vertically spaced apart from the bottom (29) by at least 1 cm, preferably at least 2 cm.

7. A cooking assistance device (1) according to any one of claims 5 and 6, **characterised in that** the energy storage element (5) is a chargeable accumulator or a capacitor.

8. A cooking assistance device (1) according to any one of claims 5 to 7, **characterised in that** the energy storage element (5) is a battery insertable into and removable from the cooking assistance device (1) by the end user.

9. A cooking assistance device (1) according to any one of claims 1 to 8, **characterised in that** the cooking assistance device (1) has an energy harvesting device for supplying the electronic circuit arrangement (3) and/or an energy storage element (5) of the cooking assistance device (1) with electrical energy.

10. A cooking assistance device (1) according to any one of claims 1 to 9, **characterised in that** the cooking assistance device (1) is in the form of a float.

11. A cooking assistance device (1) according to claim 10, **characterised in that** the cooking assistance device (1) is in the form of a self-righting float.

12. A cooking assistance device (1) according to claim 11, **characterised in that** in a self-righted state of a cooking assistance device (1) floating in a water bath (20), the electronic circuit arrangement (3) is located at least partially above the water line (8) of the cooking assistance device (1).

13. A cooking assistance device (1) according to any one of claims 11 to 12, **characterised in that** in the self-righted state of a cooking assistance device (1) floating in an oil bath, the electronic circuit arrangement (3) is located at least partially above the line in which the oil level contacts the outer surface of the cooking assistance device (1).

## Revendications

1. Dispositif d'aide à la cuisson (1) avec un capteur de température (2) et un système de circuit électronique (3) auquel est transmise une valeur de sortie du capteur de température (2), des données pour la régulation de la température d'un récipient de cuisson (21) pouvant être chauffé par un point de cuisson (22) pouvant être transmises sans fil à une unité de réception (23) par le circuit électronique (3), **caractérisé en ce que** le dispositif d'aide à la cuisson (1) est conçu à la manière d'un culbuto qui se dresse sur un fond (29) plan et horizontal du récipient de cuisson (21) dans un état redressé.

2. Dispositif d'aide à la cuisson (1) selon la revendication 1, **caractérisé en ce que** la température du fond (29) du récipient de cuisson (21) est détectable au moyen du capteur de température (2).

3. Dispositif d'aide à la cuisson (1) selon la revendication 2, **caractérisé en ce que**, par rapport à l'état redressé qu'occupe le dispositif d'aide à la cuisson (1) sur le fond (29) plan et horizontal du récipient de cuisson (21), le capteur de température (2) est en contact avec le fond (29).

4. Dispositif d'aide à la cuisson (1) selon l'une des revendications 1 à 3, **caractérisé en ce que,** par rapport à l'état redressé qu'occupe le dispositif d'aide à la cuisson (1) sur le fond (29) plan et horizontal du récipient de cuisson (29), le système de circuit électronique (3) est espacé du fond (29) d'au moins 1 cm verticalement.

5. Dispositif d'aide à la cuisson (1) selon l'une des revendications 1 à 4, **caractérisé en ce que** le dispositif d'aide à la cuisson (1) comporte au moins un élément de stockage d'énergie (5).

6. Dispositif d'aide à la cuisson (1) selon la revendication 5, **caractérisé en ce que**, par rapport à l'état redressé qu'occupe le dispositif d'aide à la cuisson (1) sur le fond (29) plan et horizontal du récipient de cuisson (21), l'élément de stockage d'énergie (5) est espacé du fond (29) d'au moins 1 cm verticalement, de préférence d'au moins 2 cm.

7. Dispositif d'aide à la cuisson (1) selon l'une des revendications 5 ou 6, **caractérisé en ce que** l'élément de stockage d'énergie (5) est un accumulateur rechargeable ou un condensateur.

8. Dispositif d'aide à la cuisson (1) selon l'une des revendications 5 à 7, **caractérisé en ce que** l'élément de stockage d'énergie (5) est une batterie pouvant être introduite et retirée du dispositif d'aide à la cuisson (1) par l'utilisateur final.

9. Dispositif d'aide à la cuisson (1) selon l'une des revendications 1 à 8, **caractérisé en ce que** le dispositif d'aide à la cuisson (1) comporte un dispositif de récupération d'énergie pour alimenter en énergie électrique le système de circuit électronique (3) et/ou un élément de stockage d'énergie (5) du dispositif d'aide à la cuisson (1).

10. Dispositif d'aide à la cuisson (1) selon l'une des revendications 1 à 9, **caractérisé en ce que** le dispositif d'aide à la cuisson (1) est conçu comme un flotteur.

11. Dispositif d'aide à la cuisson (1) selon la revendication 10, **caractérisé en ce que** le dispositif d'aide à la cuisson (1) est conçu comme un flotteur à redressement automatique.

12. Dispositif d'aide à la cuisson (1) selon la revendication 11, **caractérisé en ce que,** dans un état autoredressé d'un dispositif d'aide à la cuisson (1) flottant dans un bain d'eau (20), le système de circuit électronique (3) se trouve, au moins partiellement, au-dessus de la ligne de flottaison (8) du dispositif d'aide à la cuisson (1).

13. Dispositif d'aide à la cuisson (1) selon l'une des revendications 11 à 12, **caractérisé en ce que**, dans l'état autoredressé d'un dispositif d'aide à la cuisson (1) flottant dans un bain d'huile, le système de circuit électronique (3) se trouve, au moins partiellement, au-dessus de la ligne où le niveau d'huile touche la surface extérieure du dispositif d'aide à la cuisson (1).
